# EUROPEAN PATENT APPLICATION

(11) **EP 4 617 818 A1**
(43) Date of publication of application: **17.09.2025**
(21) Application number: 25154880.6
(22) Date of filing: 30.01.2025
(51) Int. Cl.: G05D 1/60

(54) **INFORMATION PROCESSING APPARATUS, INFORMATION PROCESSING METHOD, AND COMPUTER PROGRAM PRODUCT**

(30) Priority: 13.03.2024 JP 2024038594
(71) Applicant: KABUSHIKI KAISHA TOSHIBA, Minato-ku Tokyo 105-0023 (JP)
(72) Inventor: Aisu, Hideyuki, Minato-ku, Tokyo, 105-0023 (JP); Sakakibara, Shizu, Minato-ku, Tokyo, 105-0023 (JP); Yoshida, Takufumi, Minato-ku, Tokyo, 105-0023 (JP)
(74) Representative: Hoffmann Eitle

(57) **Abstract**

An information-processing-apparatus includes a processing-unit. The processing-unit determines, using a route plan of a route on which each of mobile objects moves among routes in a movement area where the mobile objects move, for each mobile object, whether a first-partial area as a partial area to which a first-position of the mobile object existing belongs and a second-partial area as a partial area to which a second-position to move next to the first-position belongs differ among partial areas in the movement area. When the first-partial area and the second-partial area differ, the processing-unit changes a boundary between the first-partial area and the second-partial area such that the first-position is included in the second-partial area. The processing-unit generates, for each partial area, a travel plan specifying a moving timing by the mobile objects on the route avoiding a conflict between the mobile objects on the partial-area route.

## Description

### FIELD

Arrangements described herein relate generally to an information processing apparatus, an information processing method, and a computer program product.

### BACKGROUND

In a case where a plurality of mobile objects such as a mobile object, a mobile robot, and an autonomous vehicle are simultaneously moved in a narrow area, when each of the mobile objects moves on a free route and at a free timing, a conflict between the mobile objects such as a collision and a deadlock may occur.

In order to avoid occurrence of such a conflict, there has been proposed a technique of repeating processing of collectively generating detailed travel plans of all mobile objects and further re-planning a travel plan such that the conflict does not occur until a certain period ahead.

### BRIEF DESCRIPTION OF THE DRAWINGS

Fig. 1 is a block diagram of an information processing system according to an arrangement;
Fig. 2 is a diagram illustrating an example of traveling path structure information;
Fig. 3 is a diagram for explaining an example of a movement area and a plurality of zones;
Fig. 4 is a flowchart of plan generation processing according to the arrangement;
Fig. 5 is a flowchart of zone determination processing;
Fig. 6 is a diagram for explaining a specific example of zone determination processing;
Fig. 7 is a diagram illustrating an example of extraction of a route in a zone to which a mobile object belongs; and
Fig. 8 is a hardware configuration diagram of the apparatus according to the arrangement.

### DETAILED DESCRIPTION

Hereinafter, a preferred arrangement of an information processing apparatus according to the present disclosure will be described in detail with reference to the accompanying drawings.

In a technique of collectively generating detailed travel plans of all mobile objects and generating a re-plan, high-load calculation such as optimization calculation and combinatorial search is used. Such calculation often takes the scale that is dependent, for example, on the number of mobile objects and the size of a movement area (map) where the mobile object possibly moves. For example, when the scale increases, a calculation time for generating the travel plan becomes excessive, and it becomes difficult to manage the movement (travel and operation) of the mobile object in real time.

An information processing apparatus according to an arrangement generates a travel plan of a mobile object in a partial area for each of a plurality of partial areas obtained by dividing the entire movement area by using a route plan representing a plan of a route on which each of a plurality of mobile objects moves in the entire movement area. Hereinafter, the partial area is referred to as a zone. For a mobile object for which a route for moving across a plurality of zones is planned, a boundary between the plurality of zones is changed in order to take over the generation of the travel plan of the mobile object to the next zone. Thus, for example, the travel plan can be generated for each of the plurality of zones. As a result, even when the scale of the movement area or the like increases, it is possible to generate the movement plan of the mobile object at a higher speed without excessively increasing the calculation time.

The preconditions of the present arrangement will be further described. In the present arrangement, two plans of a route plan and a travel plan having different levels of detail are used. The route plan corresponds to a plan of a moving route of a plurality of mobile objects in the entire movement area. The travel plan is a plan that is generated so as to ensure that each mobile object does not cause a conflict with each other and has a level of detail that can be converted into a movement command to each mobile object.

The route plan is a plan of a route (traveling route) through which each mobile object passes on the movement area, and has low dependency between the mobile objects. Therefore, even when each of the plurality of mobile objects is configured to freely adopt the route or update the route at free timing, there is little possibility that a problem occurs. That is, the route plan can be a long-term plan for moving across a plurality of zones.

Meanwhile, the travel plan is a plan having a level of detail that can be executed even when each mobile object is interpreted as a movement command as it is. For example, in the travel plan, one mobile object avoids the other mobile object by waiting, speed adjustment, or the like.

As described above, the generation of the travel plan is processing with a high calculation load. Therefore, in the present arrangement, the travel plan is limited to a plan related to movement in the zone. In addition, in the present arrangement, generation of the travel plan can be processed in parallel by eliminating overlapping portions between the plurality of zones and eliminating mutual dependency of generation of the travel plan by each of the plurality of zones.

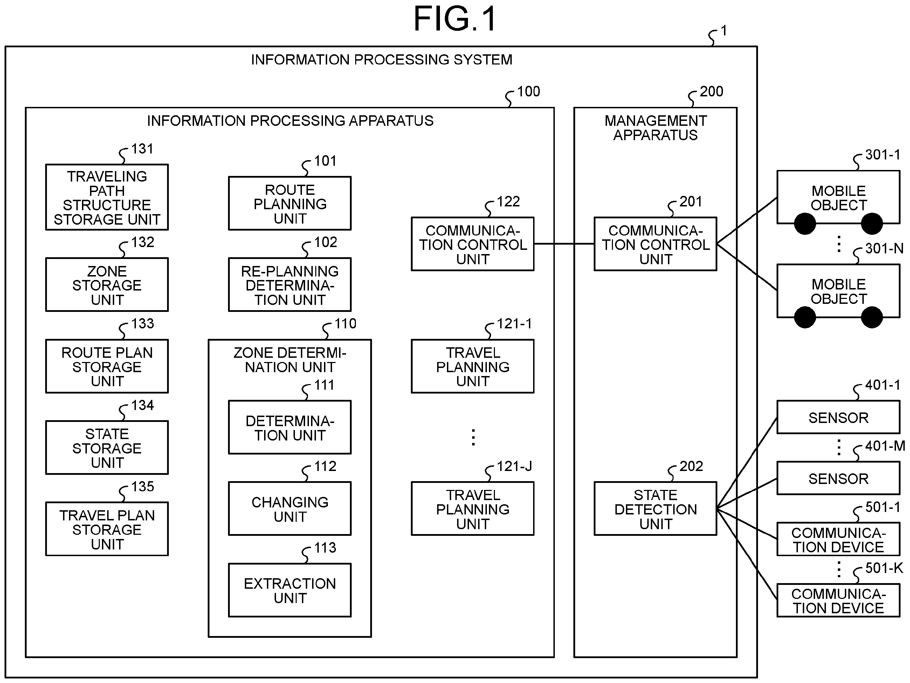

Fig. 1 is a block diagram illustrating an example of a configuration of an information processing system 1 according to an arrangement. As illustrated in Fig. 1, the information processing system 1 includes an information processing apparatus 100 and a management apparatus 200.

The information processing system 1 is a system (operation plan system) that generates a plan for controlling the movement of a plurality of mobile objects 301-1 to 301-N (N is an integer of 2 or more) and controls the movement (operation) of the mobile objects according to the generated plan. The information processing system 1 generates a plan or the like by using information acquired from a plurality of sensors 401-1 to 401-M (M is an integer of 2 or more) and a plurality of communication devices 501-1 to 501-K (K is an integer of 2 or more).

The plurality of mobile objects 301-1 to 301-N is simply referred to as mobile objects 301 in a case where it is not necessary to distinguish them. The plurality of sensors 401-1 to 401-M is simply referred to as sensors 401 in a case where it is not necessary to distinguish the sensors. The plurality of communication devices 501-1 to 501-K is simply referred to as communication devices 501 in a case where it is not necessary to distinguish the communication devices.

The mobile object 301 is a mobile object that can move according to the control of the information processing system 1, such as an automatic guided vehicle (AGV), an autonomous mobile robot, and an automatic traveling vehicle (for example, an autonomous vehicle). The mobile object 301 moves, for example, on a plurality of routes (traveling paths) arranged in a movement area such as a factory, a warehouse, and a facility site. The mobile object 301 may be equipped with a storage battery (battery) and operate using the power stored in the battery.

The sensor 401 is a sensor for detecting the state of the mobile object 301. For example, the sensor 401 is a roadside sensor such as a proximity sensor, a pressure sensor, and a photoelectric sensor. The sensor 401 detects the arrival, passage, and direction of the mobile object 301 at the place where the sensor 401 is installed, the presence or absence of loading of an article (such as baggage), and the like. The sensor 401 may be, for example, a camera (imaging device) provided on the ceiling of the facility.

The communication device 501 is a device capable of communicating with the mobile object 301. The communication device 501 communicates with the mobile object 301 at a relatively short distance, for example, near field wireless communication, infrared communication, or the like. The communication device 501 can wirelessly communicate with the mobile object 301 existing in the communication range.

The sensor 401 and the communication device 501 are used to transmit information (state information) indicating the state of the mobile object 301 to the information processing system 1. For example, the sensor 401 transmits a signal indicating information detected from the mobile object 301 to the information processing system 1. The communication device 501 transmits information received from the mobile object 301 to the information processing system 1.

The sensor 401 and the communication device 501 are arranged, for example, at a position (place) where state information used when the information processing system 1 generates a plan can be detected. For example, the sensor 401 and the communication device 501 are arranged at a place where a pause may occur on the route. As long as the state information of each mobile object 301 can be detected, only one of the sensor 401 and the communication device 501 may be provided.

The information processing apparatus 100 generates a route plan representing a route on which each mobile object 301 should move based on the content of work and the order of work that each mobile object 301 should perform. The route plan may be given from a system (device) other than the information processing apparatus 100. Furthermore, based on the route plan, the information processing apparatus 100 generates a travel plan that defines the timing at which each mobile object 301 moves along each route so as not to cause a collision and a deadlock in each mobile object 301.

The management apparatus 200 controls the movement of each mobile object 301 by transmitting a movement command (such as a command obtained by converting the travel plan) based on the travel plan of each mobile object 301 to each mobile object 301. In addition, the management apparatus 200 detects the state of each mobile object 301 and manages the movement (operation) of each mobile object 301 (operation management apparatus). The management apparatus 200 includes a communication control unit 201 and a state detection unit 202.

The communication control unit 201 controls communication with an external device such as the information processing apparatus 100 and the mobile object 301. For example, the communication control unit 201 transmits and receives information to and from the information processing apparatus 100 by at least one of wireless communication and wired communication. For example, the communication control unit 201 transmits and receives information to and from the mobile object 301 by wireless communication.

The state detection unit 202 acquires information (state information) indicating the state of the mobile object 301 from the communication device 501 or the sensor 401. The state detection unit 202 may acquire the state information of the mobile object 301 using the communication control unit 201. The state detection unit 202 transmits the state information of each mobile object 301 to the information processing apparatus 100 via the communication control unit 201. The state information may include the time when the traveling state of each mobile object 301 is detected.

Next, functions of the information processing apparatus 100 will be described. As illustrated in Fig. 1, the information processing apparatus 100 includes a traveling path structure storage unit 131, a zone storage unit 132, a route plan storage unit 133, a state storage unit 134, a travel plan storage unit 135, a route planning unit 101, a re-planning determination unit 102, a zone determination unit 110, travel planning units 121-1 to 121-J (J is an integer of 2 or more), and a communication control unit 122.

The traveling path structure storage unit 131 stores information (traveling path structure information) indicating the structure of the traveling path. The traveling path structure information can be expressed as, for example, a graph structure including a plurality of nodes and a plurality of arcs (traveling paths) connecting the plurality of nodes. The format of the traveling path structure information is not limited to the graph structure, and may be any other format.

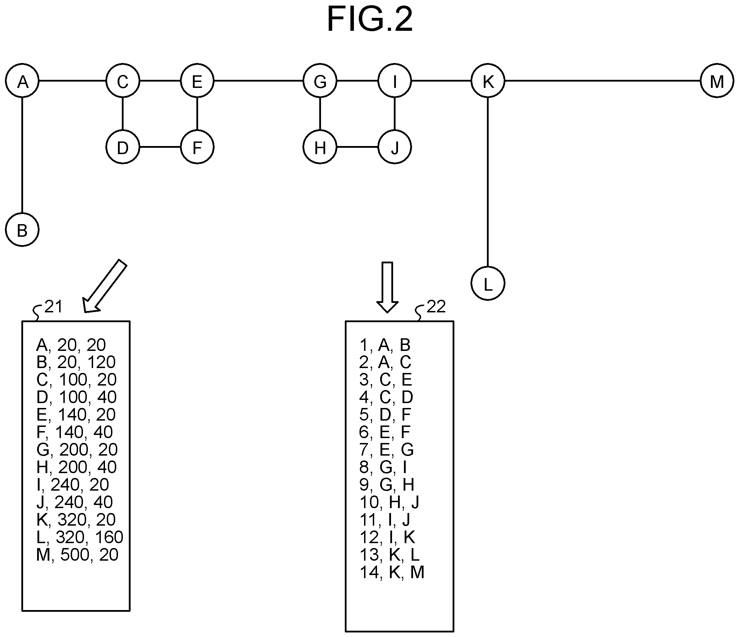

Fig. 2 is a diagram illustrating an example of traveling path structure information. Each traveling path is represented by a straight line connecting a plurality of nodes. In Fig. 2, each circle represents a node, and a line segment connecting a plurality of circles represents an arc (traveling path). The node represents an end portion of the traveling path or an intersection of the plurality of traveling paths. An alphabet in a circle represents a node ID which is identification information for identifying a node.

Detailed information 21 indicates an example of detailed information of each node. In the example of Fig. 2, the detailed information 21 includes a node ID, an X coordinate, and a Y coordinate. For example, coordinates of a node whose node ID is A are (X,Y) = (20,20).

The detailed information 22 indicates an example of detailed information of the traveling path. In the example of Fig. 2, the detailed information 22 indicates a traveling path ID and node IDs of the nodes at both ends of the traveling path. The traveling path ID is identification information for identifying the traveling path. For example, the traveling path ID of the traveling path between a node of which a node ID is A and a node of which the node ID is B is 1, and the node IDs of the nodes at both ends of the traveling path are A and B.

The traveling path structure information of Fig. 2 is an example, and the traveling path structure information is not limited thereto. For example, the traveling path structure information may include the detailed information 22 in which distances (distances of arcs) between a plurality of nodes are associated with traveling path IDs. The distance of the arc may be calculated based on the positions of the nodes on both sides of the arc. The traveling path structure information may include the detailed information 22 in which a standard time required for traveling on the traveling path is associated with a traveling path ID.

The description returns to Fig. 1. The zone storage unit 132 stores zone information for dividing the entire movement area into a plurality of zones. The zone information is, for example, information indicating positions (coordinates) of a plurality of zones included in the movement area.

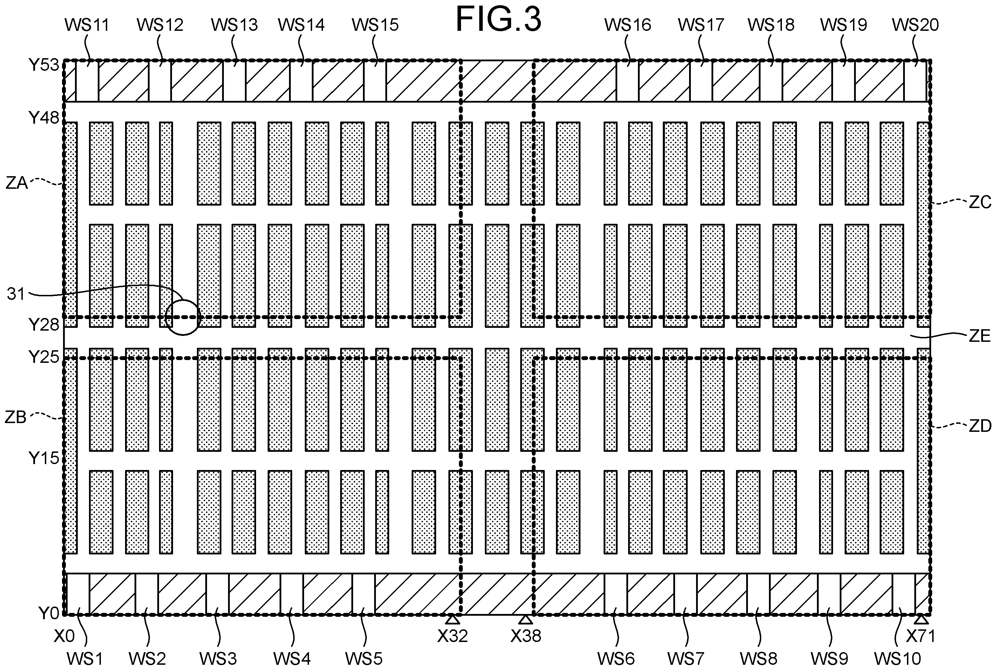

Fig. 3 is a diagram for describing an example of a movement area and a plurality of zones. Fig. 3 corresponds to an example in which the movement area is observed from above. The movement area is represented by, for example, two-dimensional coordinates (X, Y). In the example of Fig. 3, the movement area corresponds to the area from X0 to X71 and the area from Y0 to Y53. The movement area includes five zones ZA, ZB, ZC, ZD, and ZE. The zones ZA, ZB, ZC, and ZD are rectangular areas. The zone ZE corresponds to an area obtained by excluding the other zones ZA, ZB, ZC, and ZD from the movement area.

Note that Fig. 3 is an example in which a warehouse in which the mobile object 301 such as an AGV conveys an operating shelf in which an article is stored to a station that performs picking is set as a movement area. A gray rectangular portion corresponds to a position where the shelf is installed, and a white portion between the shelves corresponds to a route on which the mobile object 301 can move. The stations WS1 to WS20 correspond to stations to which the mobile object 301 moves.

An area 31 in Fig. 3 corresponds to an area including a boundary between the zone ZA and the zone ZE. In the present arrangement, when there is a mobile object moving across such a boundary, the boundary between the plurality of zones can be changed.

The zone storage unit 132 stores, for example, zone information in which each of the zones ZA, ZB, ZC, ZD, and ZE in the movement area as illustrated in Fig. 3 is represented by a coordinate value. The boundary of the zone indicated by the zone information may be changed by the zone determination unit 110. Therefore, the zone information stored in the zone storage unit 132 corresponds to initial values of a plurality of zones. Hereinafter, a zone represented by zone information corresponding to the initial value may be referred to as a basic zone.

The route plan storage unit 133 stores, for example, a route plan generated by the route planning unit 101. For example, the route plan storage unit 133 stores a route plan generated for each mobile object 301. The route plan may be represented in any form. For example, when the traveling path structure information is represented by a graph structure as illustrated in Fig. 2, the route plan may have a format in which nodes to which the mobile object 301 moves are arranged in order of movement.

For example, a route plan of a route on which the mobile object 301 moves from the node of which the node ID is L to the node of which the node ID is A is represented as "L, K, I, G, E, C, and A". The route plan may include information indicating work to be performed by the node. For example, in a case where the work of loading the article is performed at the node of which the node ID is L and the work of unloading the article is performed at the node of which the node ID is A, the route plane may be represented as "L-Load, K, I, G, E, C, A-Unload".

The state storage unit 134 stores state information indicating the state of each mobile object 301. The state information includes, for example, a current position of the mobile object 301 and a traveling state indicating whether the mobile object is traveling or stopped. The state storage unit 134 stores, for example, state information acquired by the state detection unit 202 of the management apparatus 200 and transmitted from the management apparatus 200 via the communication control unit 201.

The travel plan storage unit 135 stores travel plans generated by the travel planning units 121-1 to 121-J. As will be described later, the travel plan is generated for each of the plurality of zones. Therefore, the travel plan storage unit 135 stores the travel plan for each of the plurality of zones.

Each storage unit (traveling path structure storage unit 131, zone storage unit 132, route plan storage unit 133, state storage unit 134, travel plan storage unit 135) can be configured by any commonly used storage medium such as a flash memory, a memory card, a random access memory (RAM), a hard disk drive (HDD), and an optical disk.

Each storage unit may be a physically different storage medium or may be realized as different storage areas of the physically same storage medium.

The route planning unit 101 generates the route plan. For example, the route planning unit 101 generates a route plan representing a route on which each mobile object 301 should move based on information regarding the content of work and the order of work to be performed by each mobile object 301 determined in advance. The route planning unit 101 stores the data of the generated route plan in the route plan storage unit 133. The route plan may be generated by any method. For example, the route planning unit 101 generates a route plan of each of the mobile objects 301 based on an evaluation criterion that a travel distance by which the plurality of mobile objects 301 travels in the opposite direction on the same traveling path decreases.

The route plan may be generated by an external device or may be generated by a user. In this case, the route planning unit 101 acquires the route plan and stores the route plan in the route plan storage unit 133. The route planning unit 101 may receive route planning data from an external device via the communication control unit 122. The route planning unit 101 may acquire route plan data via an input device operated by the user.

The re-planning determination unit 102 determines whether or not to execute re-planning for updating the travel plan. For example, the re-planning determination unit 102 compares the travel plan stored in the travel plan storage unit 135 with the traveling state of the mobile object 301 detected by the state detection unit 202, and determines whether or not to perform the re-planning. For example, in a case where the following conditions are satisfied, the re-planning determination unit 102 determines to perform re-planning and generates a re-planning trigger.
- Elapse of predetermined period (every certain period)
- When it is determined that the travel plan cannot be followed for at least one mobile object 301
- When a new work to be performed and a new article to be carried out occur
- In a case where the mobile object 301 on which a route for moving across a plurality of zones is planned has moved to the vicinity of the boundary between the plurality of zones

When the re-planning trigger occurs, that is, when it is determined to perform re-planning, the zone determination unit 110 determines a zone to be unitary for performing re-planning. Thereafter, the travel planning units 121-1 to 121-J execute re-planning for updating the travel plan for each determined zone.

The zone determination unit 110 includes a determination unit 111, a changing unit 112, and an extraction unit 113.

The determination unit 111 determines whether or not the mobile object 301 moves across the zone using the route plan. For example, the determination unit 111 determines, for each of the plurality of mobile objects 301, whether or not a zone Z1 (first partial area) to which a position P1 (first position) at which the mobile object 301 exists among the plurality of zones belongs is different from a zone Z2 (second partial area) to which a position P2 (second position) to move next to the position P1 belongs, using the route plan. The position P1 is, for example, a current position of the mobile object 301, a position where the mobile object 301 is instructed to update the travel plan next, a position where the mobile object 301 exists at the time when the re-planning trigger is generated, and the like. The determination unit 111 can specify the zone to which the position P1 or the position P2 belongs by referring to, for example, zone information (basic zone) stored in the zone storage unit 132.

When the route plane is represented by the order of moving the nodes included in the graph structure, the position P2 to move next to the position P1 can be specified as a position corresponding to a node whose order of movement is next to the node corresponding to the position P1. The method for specifying the position P2 to move next to the position P1 is not limited thereto, and any method may be used. For example, the position P2 may be specified as a position after the mobile object 301 moves from the position P1 at the moving speed of the mobile object 301 for a designated time.

The changing unit 112 changes the boundary between the zones according to the determination result by the determination unit 111. For example, when the zone Z1 and the zone Z2 are different from each other, the changing unit 112 changes the boundary between the zone Z1 and the zone Z2 such that the position P1 is included in the zone Z2.

As described above, the determination by the determination unit 111 is executed for each of the plurality of mobile objects 301. Therefore, when it is determined that the plurality of mobile objects 301 moves across the zones, the changing unit 112 can execute the processing of changing the boundary between the zones a plurality of times. Therefore, the changing unit 112 may set an upper limit value for the number of changes for changing the boundary. For example, when the number of changes for changing the boundary is equal to or less than the upper limit value and the zone Z1 and the zone Z2 are different from each other, the changing unit 112 changes the boundary between the zone Z1 and the zone Z2 such that the position P1 is included in the zone Z2.

The extraction unit 113 extracts a route of the mobile object 301 inside the zone to which the mobile object 301 belongs. For example, the extraction unit 113 extracts, for each of the plurality of mobile objects 301, a route inside a zone to which the mobile object 301 belongs among the plurality of zones whose boundaries have been changed. The extracted route is referred to, for example, when the travel planning units 121-1 to 121-J generate a travel plan.

The travel planning units 121-1 to 121-J independently generate a travel plan for each of the plurality of zones after the boundary is changed. Since the travel planning units 121-1 to 121-J have similar functions except that the target zone is different, the travel planning unit 121 may be simply referred to as a travel planning unit when there is no need to distinguish the target zones.

One travel planning unit 121 may be provided for one zone, or may be provided for two or more zones. By providing at least two or more (J ≥ 2) travel planning units 121, travel plans can be generated in parallel. As a result, a moving plan of the mobile object can be generated at a higher speed. Note that the plurality of travel planning units 121 may be realized by a plurality of computers (electronic device, processor, circuit, or the like), or may be realized by a configuration in which one computer generates a travel plan for each of a plurality of zones in parallel.

A method of generating the travel plan by the travel planning unit 121 may be any method. For example, the travel planning unit 121 generates, for each of the plurality of zones, a travel plan in which the timing at which the plurality of mobile objects 301 moves on the route is designated such that a conflict of the plurality of mobile objects 301 does not occur in the route included in the zone.

The travel planning unit 121 may generate a travel plan when the number of changes for changing the boundary by the changing unit 112 exceeds a threshold value. Such processing corresponds to further using the fact that the number of changes exceeds the threshold value as a re-planning trigger.

The travel planning unit 121 does not need to generate travel plans for all zones, and may generate travel plans for some zones including the zone Z1 and the zone Z2 whose boundaries have been changed, for example.

The communication control unit 122 controls communication with an external device such as the management apparatus 200. For example, the communication control unit 122 transmits the travel plan generated by the travel planning unit 121 to the management apparatus 200.

At least a part of each unit (route planning unit 101, re-planning determination unit 102, zone determination unit 110, travel planning unit 121, and communication control unit 122) may be realized by one or more processing units. Each of the above units is realized by, for example, one or a plurality of processors. For example, each of the above units may be realized by causing a processor such as a central processing unit (CPU) and a graphics processing unit (GPU) to execute a program, that is, by software. Each of the above units may be realized by a processor such as a dedicated integrated circuit (IC), that is, hardware. Each of the above units may be realized by using software and hardware in combination. When a plurality of processors is used, each processor may implement one of the units or two or more of the units.

The information processing apparatus 100 may be physically configured by one apparatus or may be physically configured by a plurality of apparatuses. For example, the information processing apparatus 100 may be constructed on a cloud environment. Furthermore, each unit in the information processing apparatus 100 may be dispersedly provided in a plurality of apparatuses.

Furthermore, the information processing apparatus 100 and the management apparatus 200 may exist on physically the same apparatus (computer system). The information processing apparatus 100 and the management apparatus 200 may exist on physically different devices (computer systems) and may be connected to each other via a network.

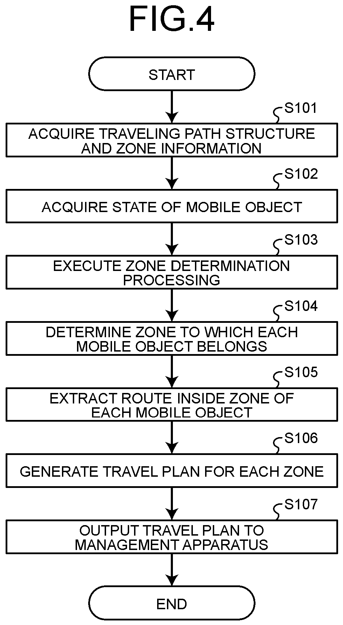

Next, the plan generation processing by the information processing apparatus 100 according to the arrangement will be described. Fig. 4 is a flowchart illustrating an example of the plan generation processing according to the arrangement. The plan generation processing in Fig. 4 is executed, for example, when the re-planning determination unit 102 determines to execute re-planning, that is, when a re-planning trigger is generated.

The zone determination unit 110 acquires data necessary for generating a travel plan such as a traveling path structure and zone information from, for example, the traveling path structure storage unit 131 and the zone storage unit 132 (Step S101).

The zone determination unit 110 acquires, for example, state information (such as a current position) of each mobile object 301 detected by the state detection unit 202 and stored in the state storage unit 134 (Step S102).

The zone determination unit 110 executes zone determination processing for determining a zone to be used for generating a travel plan (Step S103). Details of the zone determination processing will be described later.

The zone determination unit 110 (determination unit 111) determines a zone to which each mobile object 301 belongs among the plurality of determined zones (Step S104). The extraction unit 113 extracts a route of the mobile object 301 inside the zone to which the mobile object 301 belongs (Step S105).

The travel planning unit 121 generates a travel plan for each of the plurality of zones (Step S106). The communication control unit 122 outputs the generated travel plan to the management apparatus 200 (Step S107), and ends the plan generation processing.

When the next plan generation processing is executed, the determination unit 111 acquires zone information from the zone storage unit 132 again. In other words, the zone whose boundary has been changed is returned to the initial value (basic zone).

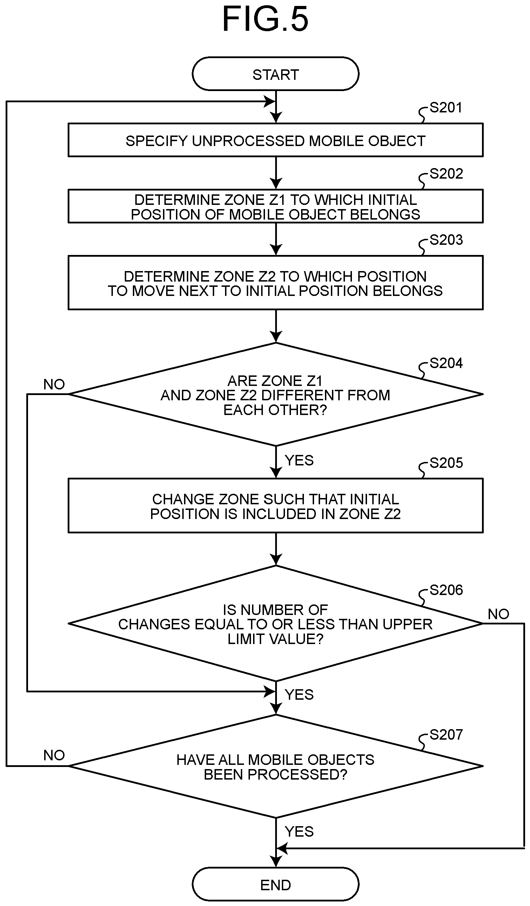

Next, the zone determination processing in Step S103 will be described in detail. Fig. 5 is a flowchart illustrating an example of zone determination processing.

The determination unit 111 specifies an unprocessed mobile object 301 among the plurality of mobile objects 301 (Step S201). The determination unit 111 determines the zone Z1 to which the specified initial position of the mobile object 301 belongs (Step S202). The initial position corresponds to a position P1 where the mobile object 301 exists. As described above, the initial position (position P1) is, for example, the current position of the mobile object 301, a position where the mobile object 301 is instructed to update the travel plan next, and the like.

The determination unit 111 determines the zone Z2 to which the position P2 to move next to the initial position belongs (Step S203). The determination unit 111 determines whether or not the zone Z1 and the zone Z2 are different from each other (Step S204).

When the zone Z1 and the zone Z2 are different from each other (Step S204: Yes), the changing unit 112 changes the boundary between the zone Z1 and the zone Z2 such that the initial position (position P1) is included in the zone Z2 (Step S205).

The changing unit 112 determines whether or not the number of times the boundary has been changed is equal to or less than the upper limit value (Step S206). When the number of changes is equal to or less than the upper limit value (Step S206: Yes) and when the zone Z1 and the zone Z2 are the same (Step S204: No), the determination unit 111 determines whether or not all the mobile objects 301 have been processed (Step S207).

In a case where not all the mobile objects 301 have been processed (Step S207: No), the determination unit 111 returns to Step S201 and repeats the processing.

When all the mobile objects 301 have been processed (Step S207: Yes) and when the number of changes exceeds the upper limit value (Step S206: No), the zone determination processing ends.

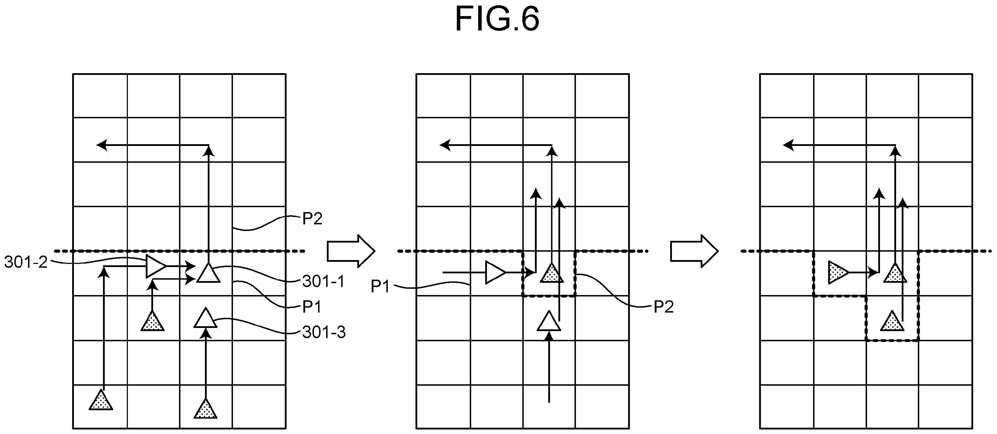

Fig. 6 is a diagram for describing a specific example of the zone determination processing. Dashed lines represent the boundary between the two zones. The mass and the arrow correspond to, for example, a node and an arc (route). Fig. 6 illustrates an example of a situation in which the three mobile objects 301-1, 301-2, and 301-3 move.

The left part of Fig. 6 illustrates a situation in which each mobile object 301 belongs to a lower zone of the two basic zones when the re-planning is started. Each mobile object 301 is given a route plan to move to an upper zone of the two basic zones.

In the situation in the left part of Fig. 6, the determination unit 111 determines that the lower zone (zone Z1) to which the initial position (position P1) belongs and the upper zone (zone Z2) to which the position P2 to move next belongs are different for the mobile object 301-1. Therefore, the changing unit 112 changes the boundary between the zone Z1 and the zone Z2 such that the position P1 is included in the upper zone Z2.

The central part of Fig. 6 illustrates a situation in which the boundary is changed in this way. In this situation, the determination unit 111 further determines that the lower zone (zone Z1) to which the initial position (position P1) belongs and the upper zone (zone Z2) to which the position P2 to move next belongs are different for the next mobile object 301-2. Therefore, the changing unit 112 further changes the boundary between the zone Z1 and the zone Z2 such that the position P1 is included in the zone Z2.

Similarly, the boundary of the mobile object 301-3 is also changed. The right part of Fig. 6 illustrates a situation after the boundaries of the three mobile objects 301-1, 301-2, and 301-3 are changed. Thereafter, the travel plan of the three mobile objects 301-1, 301-2, and 301-3 is generated by the travel planning unit 121 corresponding to the zone Z2.

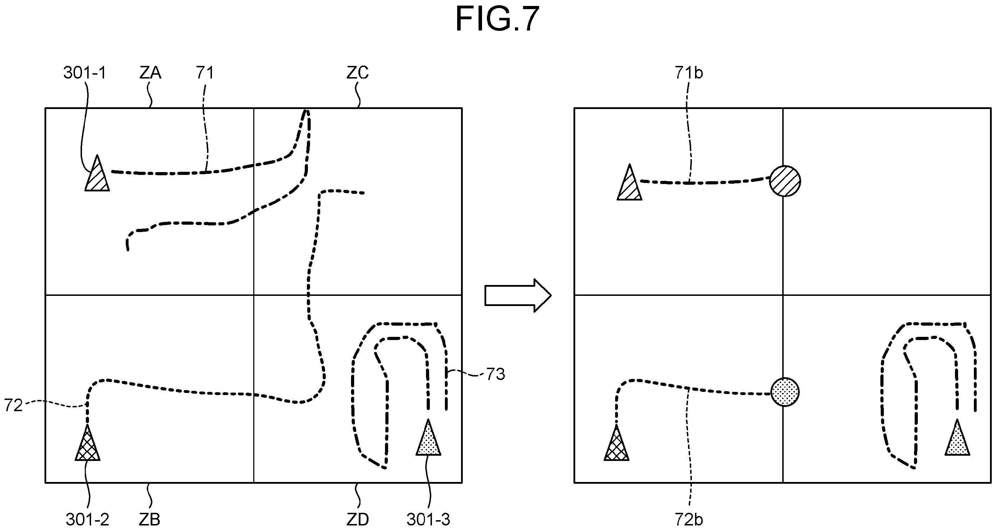

Fig. 7 is a diagram illustrating an example of extraction of the route in the zone to which the mobile object 301 belongs. Fig. 7 illustrates an example in which the movement area is divided into four zones ZA, ZB, ZC, and ZD. The left part of Fig. 7 illustrates an example of routes 71, 72, and 73 set in the route plan for the mobile objects 301-1 to 301-3. The route 71 is a route across the plurality of zones ZA and ZC. The route 72 is a route across the plurality of zones ZB, ZD, and ZC. Meanwhile, the route 73 is a route in one zone ZD.

The extraction unit 113 extracts a route of each mobile object 301 inside a zone to which each mobile object 301 belongs. The right part of Fig. 7 illustrates a situation in which the route in the zone is extracted by the extraction unit 113. In this example, for the mobile object 301-1, a route 71b from the current position of the mobile object 301-1 to the boundary between the zone ZA and the zone ZC is extracted. In this manner, the extraction unit 113 extracts a route of a portion including the current position of the mobile object 301. That is, the extraction unit 113 does not extract the portion of the route in the zone ZA after the mobile object 301-1 returns from the zone ZC. For the mobile object 301-2, a route 72b from the current position of the mobile object 301-2 to the boundary between the zone ZB and the zone ZD is extracted.

### First Modification

The number of basic zones (initial values of the plurality of zones) does not need to be one, and may be plural. For example, the determination unit 111 may select one of one or more initial values (basic zones) of the plurality of zones, and perform determination using the selected basic zone. A method of selecting the basic zone may be any method, and for example, the following method can be used.

(M1) A basic zone in accordance with a time zone in which determination (re-planning) is performed is selected.

(M2) When a predetermined condition is satisfied, a basic zone different from the used basic zone is selected.

For example, depending on the time zone, only some of the plurality of zones in the movement area may be used. For example, a conveyance system that conveys shelves in a warehouse may be configured to use only picking stations included in some zones in a certain time zone. The above (M1) can be applied to such a situation. For example, only a zone used for each time zone is determined as a basic zone, and the determination unit 111 selects the basic zone determined for the time zone at the time of re-planning.

The above (M2) will be further described. First, the determination unit 111 selects a certain basic zone as the initial value I1 (first initial value) and makes a determination. When the predetermined condition is satisfied during the execution of the plan generation processing using the basic zone, the determination unit 111 selects a basic zone different from the basic zone being used as the initial value I2 (second initial value), and uses the initial value I2 in the subsequent determination.

The initial value I2 includes, for example, a zone in which at least a part of a plurality of zones corresponding to the initial value I1 is divided into a plurality of zones. The condition represents, for example, at least one of the following conditions.
- Condition indicating that the number of mobile objects 301 included in the plurality of zones exceeds a specified number
- Condition indicating that generation of travel plan is not completed within specified time

(M2) According to this, for example, as the number of mobile objects 301 belonging to some zones increases, it is possible to avoid a situation in which the load of generating the travel plan for the zone increases and the generation of the travel plan is not completed within the required time.

### Second Modification

In the example of Fig. 3, the zone ZE is a zone including a narrower area than other zones. Therefore, a situation in which the zone ZE is divided into a plurality of zones may occur by repeating the processing of changing the boundary with another zone. In order to avoid the occurrence of such a situation, it may be configured to determine a position (permitted position) at which the change of the boundary is permitted and permit the change of the boundary in a case where the position P1 is included in the permitted position. In a case where the position P1 is not included in the permitted position, there may be a situation in which the mobile object 301 stops due to the boundary not being changed. However, by returning to the basic zone and repeating the re-planning, a plan in which the mobile object 301 moves is created, and the mobile object 301 can move toward the next zone.

For example, the changing unit 112 changes the boundary in a case where the zone Z1 and the zone Z2 are different from each other and the position P1 is included in one or more permitted positions defined as a position where the change of the boundary is permitted.

As described above, in the arrangement, the travel plan of the mobile object in the zone is generated for each of the plurality of partial areas (zones) obtained by dividing the entire movement area. As a result, it is possible to generate a travel plan of a mobile object having a route for moving across a plurality of zones with less calculation time while ensuring generation of a travel plan in which no conflict occurs in each zone. That is, it is possible to generate a movement plan of the mobile object at a higher speed.

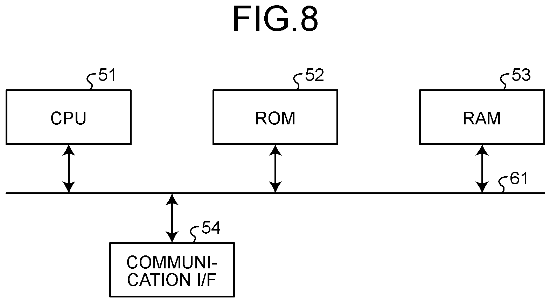

Next, a hardware configuration of the apparatus (information processing apparatus and management apparatus) according to the arrangement will be described with reference to Fig. 8. Fig. 8 is an explanatory diagram illustrating a hardware configuration example of the apparatus according to the arrangement.

The apparatus according to the arrangement includes a control device such as a central processing unit (CPU) 51, a storage device such as a read only memory (ROM) 52 and a random access memory (R_AM) 53, a communication I/F 54 that is connected to a network and performs communication, and a bus 61 that connects the respective units.

The program executed by the apparatus according to the arrangement is provided by being incorporated in the ROM52 or the like in advance.

The program executed by the apparatus according to the arrangement may be provided as a computer program product by being recorded as a file in an installable format or an executable format in a computer-readable recording medium such as a compact disk read only memory (CD-ROM), a flexible disk (FD), a compact disk recordable (CD-R), or a digital versatile disk (DVD).

Furthermore, the program executed by the apparatus according to the arrangement may be stored on a computer connected to a network such as the Internet and provided by being downloaded via the network. In addition, the program executed by the apparatus according to the arrangement may be provided or distributed via a network such as the Internet.

The program executed by the apparatus according to the arrangement can cause a computer to function as each unit of the above-described apparatus. In this computer, the CPU51 can read a program from a computer-readable storage medium onto a main storage device and execute the program.

A configuration example of the arrangement will be described below.

Configuration Example 1. An information processing apparatus (100) according to an arrangement includes a processing unit. The processing unit is configured to determine, using a route plan representing a plan of a route on which each of a plurality of mobile objects (301-1 to 301-N) moves among a plurality of routes included in a movement area in which the plurality of mobile objects (301-1 to 301-N) moves, for each of the plurality of mobile objects (301-1 to 301-N), whether or not a first partial area (Z1) that is a partial area to which a first position (P1) of the mobile object existing belongs and a second partial area (Z2) that is a partial area to which a second position (P2) to move next to the first position (P1) belongs are different from each other among a plurality of partial areas included in the movement area.

The processing unit is configured to change a boundary between the first partial area (Z1) and the second partial area (Z2) such that the first position (P1) is included in the second partial area (Z2) when the first partial area (Z1) and the second partial area (Z2) are different from each other. The processing unit is configured to generate, for each of the plurality of partial areas, a travel plan specifying a timing at which the plurality of mobile objects (301-1 to 301-N) moves on the route such that a conflict between the plurality of mobile objects (301-1 to 301-N) does not occur on the route included in the partial area.

Configuration Example 2. In the information processing apparatus (100) according to configuration example 1, the processing unit changes the boundary such that the first position (P1) is included in the second partial area (Z2) when a number of changes for changing the boundary is equal to or less than an upper limit value and the first partial area (Z1) and the second partial area (Z2) are different from each other.

Configuration Example 3. In the information processing apparatus (100) according to configuration example 1 or 2, the processing unit generates the travel plan when a number of changes for changing the boundary exceeds a threshold value.

Configuration Example 4. In the information processing apparatus (100) according to configuration example 3, the processing unit generates the travel plan for the first partial area (Z1) and the second partial area (Z2) whose boundaries are changed.

Configuration Example 5. In the information processing apparatus (100) according to any one of configuration examples 1 to 4, the processing unit changes the boundary when the first partial area (Z1) and the second partial area (Z2) are different from each other and the first position (P1) is included in one or more permitted positions defined as a position where change of the boundary is permitted.

Configuration Example 6. In the information processing apparatus (100) according to any one of configuration examples 1 to 5, the processing unit determines whether or not the first partial area (Z1) and the second partial area (Z2) are different from each other among the plurality of partial areas corresponding to any of one or more initial values of the plurality of the partial areas.

Configuration Example 7. In the information processing apparatus (100) according to configuration example 6, the processing unit uses the initial value in accordance with a time zone in which determination is performed among the one or more initial values.

Configuration Example 8. In the information processing apparatus (100) according to configuration example 6, the processing unit determines whether or not the first partial area (Z1) and the second partial area (Z2) are different from each other by using a first initial value from among the first initial value and a second initial value including a partial area obtained by dividing at least a part of the plurality of partial areas corresponding to the first initial value into a plurality of zones The processing unit further determines whether or not the first partial area (Z1) and the second partial area (Z2) are different from each other by using the second initial value when a predetermined condition is satisfied.

Configuration Example 9. In the information processing apparatus (100) according to configuration example 8, the condition represents at least one of a condition indicating that the number of mobile objects (301-1 to 301-N) included in the plurality of partial areas exceeds a specified number and a condition indicating that generation of the travel plan is not completed within a specified time.

Configuration Example 10. According to an arrangement, an information processing method is executed by an information processing apparatus (100). The method includes determining, using a route plan representing a plan of a route on which each of a plurality of mobile objects (301-1 to 301-N) moves among a plurality of routes included in a movement area in which the plurality of mobile objects (301-1 to 301-N) moves, for each of the plurality of mobile objects (301-1 to 301-N), whether or not a first partial area (Z1) that is a partial area to which a first position (P1) of the mobile object existing belongs and a second partial area (Z2) that is a partial area to which a second position (P2) to move next to the first position (P1) belongs are different from each other among a plurality of partial areas included in the movement area. The method includes changing a boundary between the first partial area (Z1) and the second partial area (Z2) such that the first position (P1) is included in the second partial area (Z2) when the first partial area (Z1) and the second partial area (Z2) are different from each other. The method includes generating, for each of the plurality of partial areas, a travel plan specifying a timing at which the plurality of mobile objects (301-1 to 301-N) moves on the route such that a conflict between the plurality of mobile objects (301-1 to 301-N) does not occur on the route included in the partial area.

Configuration Example 11. According to an arrangement, a computer program product has a computer readable medium including programmed instructions stored thereon. When executed by a computer, the instructions cause the computer to execute determining, using a route plan representing a plan of a route on which each of a plurality of mobile objects (301-1 to 301-N) moves among a plurality of routes included in a movement area in which the plurality of mobile objects (301-1 to 301-N) moves, for each of the plurality of mobile objects (301-1 to 301-N), whether or not a first partial area (Z1) that is a partial area to which a first position (P1) of the mobile object existing belongs and a second partial area (Z2) that is a partial area to which a second position (P2) to move next to the first position (P1) belongs are different from each other among a plurality of partial areas included in the movement area. The instructions cause the computer to execute changing a boundary between the first partial area (Z1) and the second partial area (Z2) such that the first position (P1) is included in the second partial area (Z2) when the first partial area (Z1) and the second partial area (Z2) are different from each other. The instructions cause the computer to execute generating, for each of the plurality of partial areas, a travel plan specifying a timing at which the plurality of mobile objects (301-1 to 301-N) moves on the route such that a conflict between the plurality of mobile objects (301-1 to 301-N) does not occur on the route included in the partial area.

While certain arrangements have been described, these arrangements have been presented by way of example only, and are not intended to limit the scope of the claims. Indeed, the apparatuses described herein may be embodied in a variety of other forms; furthermore various omissions, substitutions and changes in the form of the apparatuses described herein may be made.

## Claims

1. An information processing apparatus (100) comprising a processing unit configured to:
determine, using a route plan representing a plan of a route on which each of a plurality of mobile objects (301-1 to 301-N) moves among a plurality of routes included in a movement area in which the plurality of mobile objects (301-1 to 301-N) moves, for each of the plurality of mobile objects (301-1 to 301-N), whether or not a first partial area (Z1) that is a partial area to which a first position (P1) of the mobile object existing belongs and a second partial area (Z2) that is a partial area to which a second position (P2) to move next to the first position (P1) belongs are different from each other among a plurality of partial areas included in the movement area,
change a boundary between the first partial area (Z1) and the second partial area (Z2) such that the first position (P1) is included in the second partial area (Z2) when the first partial area (Z1) and the second partial area (Z2) are different from each other; and
generate, for each of the plurality of partial areas, a travel plan specifying a timing at which the plurality of mobile objects (301-1 to 301-N) moves on the route such that a conflict between the plurality of mobile objects (301-1 to 301-N) does not occur on the route included in the partial area.

2. The information processing apparatus (100) according to claim 1, wherein
the processing unit changes the boundary such that the first position (P1) is included in the second partial area (Z2) when a number of changes for changing the boundary is equal to or less than an upper limit value and the first partial area (Z1) and the second partial area (Z2) are different from each other.

3. The information processing apparatus (100) according to claim 1, wherein
the processing unit generates the travel plan when a number of changes for changing the boundary exceeds a threshold value.

4. The information processing apparatus (100) according to claim 3, wherein
the processing unit generates the travel plan for the first partial area (Z1) and the second partial area (Z2) whose boundaries are changed.

5. The information processing apparatus (100) according to claim 1, wherein
the processing unit changes the boundary when the first partial area (Z1) and the second partial area (Z2) are different from each other and the first position (P1) is included in one or more permitted positions defined as a position where change of the boundary is permitted.

6. The information processing apparatus (100) according to claim 1, wherein
the processing unit determines whether or not the first partial area (Z1) and the second partial area (Z2) are different from each other among the plurality of partial areas corresponding to any of one or more initial values of the plurality of the partial areas.

7. The information processing apparatus (100) according to claim 6, wherein
the processing unit uses the initial value in accordance with a time zone in which determination is performed among the one or more initial values.

8. The information processing apparatus (100) according to claim 6, wherein
the processing unit
determines whether or not the first partial area (Z1) and the second partial area (Z2) are different from each other by using a first initial value from among the first initial value and a second initial value including a partial area obtained by dividing at least a part of the plurality of partial areas corresponding to the first initial value into a plurality of zones, and
further determines whether or not the first partial area (Z1) and the second partial area (Z2) are different from each other by using the second initial value when a predetermined condition is satisfied.

9. The information processing apparatus (100) according to claim 8, wherein
the condition represents at least one of a condition indicating that a number of mobile objects (301-1 to 301-N) included in the plurality of partial areas exceeds a specified number and a condition indicating that generation of the travel plan is not completed within a specified time.

10. An information processing method executed by an information processing apparatus (100), the method comprising:
determining, using a route plan representing a plan of a route on which each of a plurality of mobile objects (301-1 to 301-N) moves among a plurality of routes included in a movement area in which the plurality of mobile objects (301-1 to 301-N) moves, for each of the plurality of mobile objects (301-1 to 301-N), whether or not a first partial area (Z1) that is a partial area to which a first position (P1) of the mobile object existing belongs and a second partial area (Z2) that is a partial area to which a second position (P2) to move next to the first position (P1) belongs are different from each other among a plurality of partial areas included in the movement area;
changing a boundary between the first partial area (Z1) and the second partial area (Z2) such that the first position (P1) is included in the second partial area (Z2) when the first partial area (Z1) and the second partial area (Z2) are different from each other; and
generating, for each of the plurality of partial areas, a travel plan specifying a timing at which the plurality of mobile objects (301-1 to 301-N) moves on the route such that a conflict between the plurality of mobile objects (301-1 to 301-N) does not occur on the route included in the partial area.

11. A computer program product having a computer readable medium including programmed instructions stored thereon, wherein the instructions, when executed by a computer, cause the computer to execute:
determining, using a route plan representing a plan of a route on which each of a plurality of mobile objects (301-1 to 301-N) moves among a plurality of routes included in a movement area in which the plurality of mobile objects (301-1 to 301-N) moves, for each of the plurality of mobile objects (301-1 to 301-N), whether or not a first partial area (Z1) that is a partial area to which a first position (P1) of the mobile object existing belongs and a second partial area (Z2) that is a partial area to which a second position (P2) to move next to the first position (P1) belongs are different from each other among a plurality of partial areas included in the movement area;
changing a boundary between the first partial area (Z1) and the second partial area (Z2) such that the first position (P1) is included in the second partial area (Z2) when the first partial area (Z1) and the second partial area (Z2) are different from each other; and
generating, for each of the plurality of partial areas, a travel plan specifying a timing at which the plurality of mobile objects (301-1 to 301-N) moves on the route such that a conflict between the plurality of mobile objects (301-1 to 301-N) does not occur on the route included in the partial area.
